# EUROPÄISCHE PATENTSCHRIFT

(11) **EP 1 882 914 B1**
(45) Veröffentlichungstag und Bekanntmachung des Hinweises auf die Patenterteilung: **06.06.2018**
(21) Anmeldenummer: 07014601.4
(22) Anmeldetag: 25.07.2007
(51) Int. Cl.: B05B 13/06, B08B 9/093, G01F 23/00, G01F 23/24

(54) **Verfahren und Anordnung zur Bestimmung der Präsenz oder des Zustandes eines Mediums oder eines Mediengemisches**
Method and assembly for determining the presence or status of a medium or a mixture
Procédé et dispositif destinés à la détermination de la présence ou de l'état d'un fluide ou d'un mélange de fluide

(30) Priorität: 25.07.2006 DE 102006034881
(43) Veröffentlichungstag der Anmeldung: 30.01.2008
(73) Patentinhaber: Sontec Sensorbau GmbH, 57688 Lennestadt (DE)
(72) Erfinder: Sonntag, Patrick, 57368 Lennestadt (DE)
(74) Vertreter: Bungartz, Klaus Peter

(56) Entgegenhaltungen:
- EP-A- 1 467 200
- US-A- 4 343 656
- US-A- 5 826 601

## Beschreibung

Die Erfindung betrifft ein Verfahren zur Bestimmung der Präsenz, der Zusammensetzung oder des Zustandes eines gasförmigen, flüssigen oder festen Mediums oder eines Gemisches solcher Medien durch Auswertung eines von einer Sensoranordnung zur Verfügung gestellten, sich zeitlich sprungartig oder kontinuierlich verändernden Signals S(t), das für die Präsenz oder die Materialeigenschaften des Mediums signifikant ist an einer, eine Messposition bildenden Messstelle die insbesondere an einer Wandfläche eines Tanks, eines sonstigen Behälters oder einer Leitung angeordnet ist, wobei das Signal S(t) an der Messstelle wᵢ aufgenommen und ausgewertet wird.

Ein Messverfahren, mit dem ein solches Verfahren durchführbar wäre, ist aus der EP 1 467 200 A1 bekannt. Bei diesem Verfahren werden anhand der Messwertänderung eines den elektrischen Widerstand messenden Sensors zu Beginn und Ende eines vorbestimmten Zeitintervalls der Signalanstieg ermittelt und weiterverarbeitet. Dieses Verfahren ist zwar gut geeignet, und den zeitlichen Verlauf eines Messsignals zu bestimmen und zur weiteren Messung auszunutzen, hat aber den Nachteil, dass bei bestimmten Anwendungen, insbesondere bei einer schnellen Zustandsmessung eines Mediums, aufgrund des erforderlichen Intervalls eine dynamische Echtzeitmessung kaum möglich ist und damit das Ansprechverhalten des Sensors und der Elektronik vergleichsweise träge ist. Ferner hat dieses Verfahren den Nachteil, das der Signalverlauf zwischen den Grenzen des Intervalls nicht in die Messergebnisse einfließt, so dass hieraus über eine nach geschaltete Auswertung keine zusätzlichen Schlüsse gezogen werden können.

Die Erfindung betrifft ferner auch Anwendungen des oben genannten Messverfahrens, ohne jedoch hierauf eingeschränkt zu sein. Eine mögliche Anwendung des Verfahrens besteht zum Beispiel darin, die Reinigung von verfahrenstechnischen Behältern, Kesseln oder Tanks zu überwachen beziehungsweise den Reinigungsvorgang im Bereich des Zu- oder Abflusses zu kontrollieren.

Zur Überwachung des Reinigungsvorganges ist zum Beispiel wichtig, im Rahmen der Qualitätskontrolle das Auftreffen, im Sinne des nachfolgenden Textes mit Beschwallung bezeichnet, von Flüssigkeitsstrahlen auf Wandflächen zu überwachen. Die Erfindung kann aber auch im Bereich der allgemeinen Verfahrenstechnik angewendet werden, etwa zur Detektion von Stoffströmen in Rohren, von Inhomogenitäten im Zufluss zu verfahrenstechnischen Anlagen oder dergleichen. Ferner ist die Anwendung der Erfindung nicht auf Flüssigkeiten beschränkt, vielmehr ist sie auch auf Gasströme oder sogar Festkörperströmungen, etwa im Falle von Holzpellets in Heizwerken oder Hopfenpellets im Falle der Brauereitechnik oder Gemische der verschiedenen vorgenannten Medien anwendbar. Die Probleme, die sich aus den bekannten Lösungen ergeben, werden nachfolgend anhand der Innenreinigung von Tanks der Brauereitechnik beschrieben. Grundsätzlich sind diese Nachteile des Standes der Technik aber auf eine Vielzahl von Anwendungsfällen, insbesondere die oben genannten Anwendungen, übertragbar.

Für die zyklische Beschwallung von Wandflächen mittels Flüssigkeitsstrahlen bei Reinigungsprozessen, insbesondere bei der Innenreinigung von Behältern oder Tanks, gibt es vielfältige gerätetechnische Lösungen in Form von Behälterreinigungsvorrichtungen, die auch als Orbitalreiniger, Zielstrahlreiniger, Schwallreiniger oder zum Beispiel auch Sprühkopfreiniger bekannt sind.

Eine Innenreinigung eines Kessels kann zum Beispiel über so genannte Zielstrahlreiniger, erfolgen, die einen mit wenigstens einer Düse versehenen Düsenkopf aufweisen, der um eine Drehachse umläuft und dabei die Innenwand des Behälters an immer denselben Stellen zyklisch umlaufend beschwallt. Dabei kann die Drehbewegung des Düsenkopfes um die jeweilige Drehachse durch Antriebsmittel generiert werden, die außerhalb der Behälterreinigungsvorrichtung und auch außerhalb des Behälters angeordnet und durch Fremdenergie (z.B. Elektromotor) angetrieben sind (DE 1 869 413 U). In der DE 26 45 401 C2 ist eine Behälterreinigungsvorrichtung mit den vorstehenden kinematischen Merkmalen beschrieben, deren Antriebsmittel außerhalb des Behälters angeordnet und durch die Strömungsenergie des der Behälterreinigungsvorrichtung zuströmenden Zulaufstroms der Reinigungsflüssigkeit angetrieben sind.

Schließlich ist aus der DE 102 08 237 C1 eine Behälterreinigungsvorrichtung mit den in Rede stehenden kinematischen Merkmalen bekannt, bei der die Antriebsmittel zur Generierung der Drehbewegung des Düsenkopfes gänzlich innerhalb der Behälterreinigungsvorrichtung angeordnet und durch die Strömungsenergie des der Behälterreinigungsvorrichtung zuströmenden Zulaufstroms der Reinigungsflüssigkeit angetrieben sind.

Es ist weiterhin ein anderer, als Orbitalreiniger ausgebildeter Typ einer Behälterreinigungsvorrichtung bekannt (EP 1 062 049 B1; EP 0 560 778 B1; DE 10 2004 052 794 B3), der dadurch gekennzeichnet sind, dass die an einem jeweiligen Düsenkopf angeordneten Düsen eine überlagerte räumliche Drehbewegung um zwei Drehachsen ausführen, wodurch die aus diesen Düsen austretenden Spritzstrahlen durch ihre orbitale Kinematik auf der Innenfläche des zu reinigenden Behälters eine besonders intensive mechanische Reinigungswirkung entfalten. In Abhängigkeit vom Verhältnis der um die beiden Drehachsen realisierten Drehzahlen ergibt sich auf der Innenfläche des Behälters ein typisches, immer wieder in bestimmten Zeitabständen erzeugtes Spritzmuster.

Weiterhin sind Sprühkopf- und Schwallreiniger bekannt, die meist medienangetrieben, schwallend Felder von Flüssigkeit bzw. Tropfen verschiedener Größe zur Reinigung durch das Volumen des Tanks an dessen Wand strahlen.

Für die zuverlässige Reinigung eines Behälters sind jedoch im Wesentlichen bei allen genannten Reinigertypen zwei Kriterien für die Qualität der Funktion kritisch: Zum einen muss sichergestellt werden, dass sich der Reiniger dreht zum anderen dass der Durchfluss der Reinigungsflüssigkeit durch die Düsen ungestört verläuft. Da sich mit Ausnahme von statischen Sprühköpfen bei allen Vorrichtungstypen der Düsenkopf dreht, ist spezifisch für jeden Reiniger ein spezielles zyklisches Muster zu erwarten, welches durch den Sensor selbst, oder mittels einer nach geschalteten Steuerung kontrolliert wird.

Um die genannten kritischen Reinigungskriterien kontrollieren zu können, hat es in der Vergangenheit bereits verschiedene Lösungsansätze gegeben. Zum einen wird die Membran einer Druckmesszelle in die Behälterwand eingebracht. Trifft ein Strahl auf die Membran so lenkt die Membran aus und generiert ein elektrisches Signal. Dieses Verfahren ist aus der Firmendruckschrift "Alfa Laval, Toftejorg Sanitary Rotacheck" bekannt.

Dieses Verfahren weist allerdings folgende Nachteile auf:
- Trifft der Strahl nicht direkt auf die Membran kann es zu Fehlmessungen kommen, da durch einen an der Behälterwand abgelenkten Strahl kein klares Signal generierbar ist.
- Bei hohen Temperaturen kommt es zu Fehlmessungen durch eine Verschiebung der Kennlinie des Drucksensors.
- Bei zeitlichen Änderungen des statischen Drucks des Behälters kommt es zu Kompensationsproblemen.

Beobachtungen an sog. Leitfähigkeitssonden (konduktive Elektroden), die beispielsweise als Voll- und Leermeldesonden bei der Füllstandsanzeige in Behältern Verwendung finden, haben gezeigt, dass sie im Zuge von Reinigungsprozessen zwar ein die Beschwallung mittels Flüssigkeitsstrahlen anzeigendes analoges Signal generieren, dass dieses Signal aber nicht sicher interpretationsfähig ist. Das zu gewinnende Signal ist u.a. von der Leitfähigkeit des Reinigungsmittels und der jeweiligen Belagbildung durch das im Behälter befindliche Produkt abhängig und die Elektrode kann nicht unterscheiden, ob die vorliegende und ein Ausgangssignal generierende Benetzung durch eine momentan stattgefundene oder durch eine frühere Beschwallung erfolgte.

An sich bekannte Füllstandsgrenzschalter für Flüssigkeiten oder pastöse und anhaftende Medien, die die Stärke eines einer Elektrode anhaftenden Filmes detektieren können, weil die Elektrode ein hochfrequentes Wechselfeld in das Medium einkoppelt und die dielektrischen Eigenschaften des Mediums das eingekoppelte Wechselfeld ändern, sind weniger empfindlich gegen Belagbildung und das gewinnbare Ausgangssignal ist weniger abhängig von der Leitfähigkeit der Reinigungsflüssigkeit, als dies bei konduktiven Elektroden der Fall ist. Es hat sich jedoch gezeigt, dass dieser Stand der Technik nicht geeignet ist, die Beschwallung von Wandflächen mittels Flüssigkeitsstrahlen bei Reinigungsprozessen sicher zu detektieren, und dass das gewinnbare Ausgangssignal diesbezüglich nicht auswert- und interpretierbar ist.

Weiterhin ist ein Verfahren bekannt, das auf die Auswertung des RMS Signals des durch den Strahl erzeugten Körperschalls basiert, weiches allerdings nur zuverlässig bei der Anwendung mit Zielstrahlreinigem funktioniert. Die Beschwallung mit Sprüh- oder Schwallreinigern würde hier im Rauschen des Sensors und der gesamten Anlage verloren gehen (Firmendruckschrift: Edelstahl-Reinigungstechnik; 7.Auflage; Armaturenwerke Hötenleben GmbH (AWH); 11-2006-RT; www.awh.de; "Das Ohr an der Behälterwand").

Es ist Aufgabe der vorliegenden Erfindung, ein Verfahren der gattungsgemäßen Art zu schaffen, die die Nachteile des Standes der Technik vermeiden. Insbesondere soll eine Messwertauswertung zusammen mit einem geeigneten Sensor geschaffen werden, die es ermöglichen, beide für einen planmäßigen Betrieb von Behälterreinigern notwendige Bedingungen überprüfen zu können.

Diese Aufgabe wird hinsichtlich der Messwertauswertung durch die Merkmale im Anspruchs 1 gelöst. Vorteilhafte Ausgestaltungen des Verfahrens gemäß der Erfindung sind Gegenstand der Unteransprüche.

Durch die erfindungsgemäße Auswertung der 1. oder 2. Ableitung des Eingangssignals ist es nun möglich, mittels eines oder mehreren Schwellwerten ein Ausgangssignal am Sensor zu generieren, das im Falle des Zielstrahl- oder Orbitalreinigers einen Strahl oder im Falle eines Sprühkopfes oder Schwallreinigers ein schwallendes flüssiges Feld signalisiert. Ist der Durchfluss durch eine Düse, oder durch einen Schlitz gestört, so wirkt sich dieses auf die zeitliche Folge des Sensorsignals aus. Somit kann erkannt werden, ob die Reinigung in gleich bleibender Qualität abläuft. Zu diesem Zweck kann man das Ausgangssignal als Impuls oder Haltesignal mit Retriggerung wählen.

Bei der Bestimmung der Präsenz oder des Zustandes beziehungsweise einer Zusammensetzung eines gasförmigen, flüssigen oder festen Mediums oder eines Gemisches dieser Medien wird erfindungsgemäß nun ein signifikantes Signal ermittelt, aus dem die Materialeigenschaften ersichtlich sind. Grundsätzlich kann hierbei jede Art von Sensorik Verwendung finden, wie zum Beispiel optische Sensoren als auch elektrische und opto-elektronische Sensoren. Wesentlich ist die Tatsache, dass das Signal des Sensors nachfolgend elektronisch aufbereitet wird. Soll aus dem zeitlichen Verlauf des Sensorsignals bereits unmittelbar auf den Zustand des Mediums geschlossen werden, müsste der Sensor an das zu erwartende Messverfahren angepasst sein. Oft ist dies jedoch nicht möglich, da entweder ein entsprechender Sensor nicht zur Verfügung steht oder das Messvolumen nicht frei zugänglich ist. Ferner sind am meisten geeignete Sensoren, wenn sie die oben genannten Aufgaben erfüllen können, für den Einsatz im fertigungstechnischen Verfahren zu teuer.

Durch die Erfindung wird es nun möglich, aus einem von einer Sensoranordnung zur Verfügung gestelltes Signal, das im Bedarfsfall in ein elektrisches Signal umzuwandeln ist, die Präsenz, die Zusammensetzung oder den Zustand eines Mediums soweit zu bestimmen, wie es für die Kontrolle beziehungsweise Regelung eines Prozesses notwendig ist. Unter Medium im Sinne der vorliegenden Erfindung ist jede Art von Stoffstrom beziehungsweise ein ruhender Stoff zu verstehen, wobei Stoffe flüssige, gasförmige oder feste Stoffe sein können, die rein oder als Gemisch vorliegen können.

Im nachfolgenden Ausführungsbeispiel wird die Erfindung anhand der Reinigung beziehungsweise später der Regelung von Reinigungs- und Abfüllprozessen beschrieben. Die Anwendung der Erfindung soll hierauf aber nicht eingeschränkt sein. Diese bevorzugte Anwendung des erfindungsgemäßen Lösungsgedankens besteht darin, dass als Sensor ein kapazitiver Sensor verwendet wird, um einen Medienstrom zu bestimmen. Hierunter fällt nicht nur die Bestimmung der grundsätzlichen Anwesenheit des Mediums sondern auch die Bestimmung seines Zustandes. Aus der Erkenntnis der Erfindung, dass das Signal eines solchen Messwertaufnehmers nicht nur als Rohsignal, sondern insbesondere als ein- oder zweimal differenziertes Signal verwendet werden kann, ergibt sich dann die besondere Auswertbarkeit der aufgenommenen Messgrößen.

Es wird bei der Verwendung des kapazitiven Sensors an der Messstelle, eines Volumens innerhalb eines Behälters oder ein Abschnitt der Wendung eines Kessels, über den kapazitiven Messwertaufnehmer zunächst ein hochfrequentes elektrisches Wechselfeld erzeugt. Dieses Wechselfeld bildet dann die Messstelle, wobei durch verschiedene Polarisationseffekte, insbesondere Elektronen- und Ionenpolarisation, Orientierungspolarisation und Grenzflächenpolarisation die Moleküle des Mediums polarisiert werden und so wiederum das Wechselfeld beeinflussen. Das aufgenommene Signal spiegelt frequenzabhängig ein Zusammenspiel von Messstellengeometrie, Leitwert und Polarisationverhalten bzw. dielektrisches Verhalten des Mediums wieder.

Eine weitere Erkenntnis der Erfindung liegt darin, dass der kapazitive Anteil und der Leitungsanteil des Messsignals für verschiedene Stoffe unterschiedliche dynamische Verläufe zeigen, obwohl möglicherweise die elektrischen Eigenschaften dieses Stoffes, etwa die Dielektrizitätskonstante y, der verschiedenen Stoffe gar nicht so unterschiedlich sind, um einen reproduzierbaren Unterschied im Messsignal zu erzeugen. So wird bei einer vorteilhaften Ausgestaltung des Verfahrens nicht nur die Polarisation sondern auch der Leitwert ausgenutzt. Es wird durch die Betrachtung der Ableitung des Messsignals, also der Änderungsgeschwindigkeit und bevorzugt auch der weiteren, also zweiten Ableitung des Messsignals der dynamische Verlauf dieser Messgrößen zur Auswertung herangezogen.

So weisen beispielsweise bei einer Reinigungsanwendung für Brauereikessel die verwendeten Flüssigkeiten Wasser und Lauge eine Dielektrizitätskonstante eᵣ auf, die sich nicht wesentlich unterscheiden (*e*_{r-Wasser} = 100 und _{Er-Lauge} = 115), so dass bei der vergleichsweise groben Messung alleine aufgrund dieser Unterschiede kein reproduzierbares Messergebnis erzielbar wäre. Die Leitfähigkeit beider Stoffe ist jedoch sehr unterschiedlich, so dass sich bei Messung von Lauge ein wesentlich größerer Anteil der lonenleitung ergibt, der bei reiner Betrachtung des absoluten Messwertes nicht aus dem Messsignal herausgefiltert werden kann.

Da aber die Ionenleitung wesentlich schneller zu einem Ausschlag des Messsignals führt, kann über die Betrachtung der Ableitung und der zweiten Ableitung die Unterschied zwischen verschiedenen Medien erkannt werden, wobei im Zweifel zuvor Kalibrierungsmessungen durchgeführt werden können, um die verschiedenen Signalverhalten der Medien auszutesten.

Ferner kann über die Betrachtung der Form und der Länge eines Ausschlages auf die Konsistenz des Mediums geschlossen werden.

Schließlich ist die Frequenz des elektrischen Wechselfeldes, mit dem die Messung durchgeführt wird, von Bedeutung. Die Messung wird bei einer Frequenz zwischen 80 und 200 MHz durchgeführt, wobei ein Wert zwischen 90 und 140 MHz. insbesondere zwischen 100 und 110 MHz als besonders günstig angesehen wird. Bei den sonst in Verbindung mit kapazitiven Sensoren üblichen Frequenzen im Kilohertzbereich kann es dagegen bei stark leitenden Medien, etwa einer Lauge, zu einem kapazitiven Kurzschluss kommen, da der Anteil der Ionenleitung in diesem Fall zu groß wird.

In der nachfolgenden Beschreibung werden die Vorteile der Erfindung zunächst anhand eines Überwachungsverfahren für die Reinigung von Kesseln beschrieben, ohne dass hiermit eine Einschränkung auf diesen Bereich verbunden sein soll. Sofern nachfolgend die Anwendung auf das Beschwallen von Wandflächen beschrieben wird, ist dies so zu verstehen, dass das Verfahren unter äquivalenter Anwendung der Technologie auch auf Gerinne- oder Rohrströmungen o.ä. anwendbar ist.

Das neue Verfahren ermöglicht es, dass die analogen Ausgangssignale eines an sich bekanntes Messverfahren, die bislang im Sinne der Aufgabenstellung nicht digital auswertbar waren, derart verarbeitet werden, dass im Verlauf einer aufsteigenden Flanke des generierten Signals an und/oder oberhalb eines ersten Schwellenwertes jeweils ein Einschaltpunkt für ein digitales Ausgangssignal für die Steuerung der Überwachung der Beschwallung generiert wird. Dieses digitale Ausgangssignal lässt sich dann in einer speicherprogrammierbaren Steuerung im Sinne der Aufgabenstellung verarbeiten, auswerten und interpretieren.

Eine erste Ausgestaltung des Verfahrens gemäß der Erfindung sieht vor, dass der erste Einschaltpunkt ein digitales erstes Ausgangssignal generiert und gleichzeitig eine variable, auf das zu überwachende Reinigersystem anzupassende Impulszeit startet, welche das Ausgangssignal wieder zu NULL setzt, wenn nicht innerhalb der Impulszeit ein weiterer, zweiter Einschaltpunkt die Impulszeit retriggert. Geht das Signal auf NULL, so ist nachzuvollziehen, dass der Reinigungsvorgang nicht mehr planmäßig verläuft und evt. eine der Düsen verstopf ist, oder der Reiniger nicht mehr rotiert, oder der Mediendruck nicht ausreichend hoch ist, um die Messstelle zu beschwallen.

Eine zweite Ausgestaltung des Verfahrens gemäß der Erfindung sieht vor, dass jeder Einschaltpunk ein digitales Ausgangssignal generiert, welches ein sehr kurzer, aber von einer SPS registrierbarer Impuls ist, der lediglich die Präsenz eines Flüssigkeitsstrahls oder Schwalls anzeigt, um es dem Anwender der Anlage zu ermöglichen, mittels Kontrollzeiten und Zählvorgängen die Qualität der Reinigung zu prüfen.

Eine weitere Ausgestaltung des Verfahrens gemäß der Erfindung sieht vor, dass im Verlauf einer aufsteigenden Flanke des Signals und, zeitlich gesehen, nach einem positiven Steigungsmaximum des generierten Signals, an und/oder unterhalb eines zweiten Schwellenwertes jeweils ein Ausschaltpunkt für ein digitales Ausgangssignal für die Steuerung der Überwachung der Beschwallung generiert wird. Ein diesbezüglicher weiterer Schaltpunkt eröffnet im Bedarfsfalle eine differenziertere Überwachung des Beschwallungsvorganges und des Reinigungsprozesses und kann als Doppelimpulsausgang definiert werden.

Das erfindungsgemäße Verfahren stützt sich nicht nur auf Schaltpunkte an der aufsteigenden Flanke des generierten Signals ab, sondern es ermöglicht auch eine Auswertung der jeweiligen Beträge dieses Signals. Diesbezüglich wird vorgeschlagen, dass der jeweilige Betrag des Signals zur Beurteilung der die ausgewählte Messstelle beschwallenden Reinigungsflüssigkeit herangezogen wird. So kann beispielsweise bei sonst unveränderten Beschwallungsbedingungen eine Veränderung des Betrags des Signals ein Hinweis auf die Art des Reinigungsmittels (gänzlich andere Qualität, anderer Stoffstrom, beispielsweise Übergang von Lauge auf Wasser) oder auf die quantitative Veränderung Werbrauch oder Verschmutzung; Notwenigkeit einer sog. Aufschärfung) sein.

Durch den erfindungsgemäßen Vorteil, dass auch quer strömende, durch die Behälterwand abgelenkte Strahlen zur Erzeugung eines klar definierten Signals herangezogen werden können, erhöht sich weiterhin die Sicherheit gegenüber Verfahren, die beispielsweise auf Basis von Drucksensoren arbeiten. Die Positionierung der Messstelle kann somit mit recht großer Toleranz erfolgen.. Eine Anordnung zur Durchführung des Verfahrens ist gerätetechnisch dadurch gekennzeichnet, dass die Zuführleitung einen Flansch durchdringt, der die Öffnung des Behälters verschließt und dass in dem Flansch weiterhin die Sensor-Einrichtung Aufnahme finden kann, oder seitlich in die Wand des Behälters hineinragt., die mit ihrer Elektrode den Flansch abgedichtet durchdringt, wobei die Elektrode endseitig in den Innenraum des Behälters hineinragt. Die Elektrode erzeugt in an sich bekannter Weise ein elektrisches Wechselfeld, dessen zeitliche Änderung erfasst wird, wobei letztere zur Erzeugung eines zeitveränderlichen Signals herangezogen wird. Erfindungswesentlich ist in diesem Zusammenhang, dass im Verlauf einer aufsteigenden Flanke des Signals an und/oder oberhalb eines ersten Schwellenwertes jeweils ein Einschaltpunkt für ein digitales Ausgangssignal für die Steuerung der Überwachung der Beschwailung generiert wird.

Zur Sicheren reproduzierbaren Messung wird vorgeschlagen, die Messstelle und Sensorgeometrie in den skizzierten Formen zu gestalten. Wie aus der vorangegangenen Beschreibung des Reinigungsverfahrens ersichtlich wurde, ist die Erfindung insbesondere dort von Interesse, wo entweder über einen Sensor verschiedene Messprinzipien ausgenutzt werden können (z.B. kapazitive Messung und Widerstandsmessung) oder wo die Signale verschiedener Sensoren zusammengeführt und anschließend ausgewertet werden.

Eine weitere Anwendung der Erfindung ist beispielsweise die Überwachung des Abflusses der Reinigungsflüssigkeit. Eine solche Überwachung kann zum Beispiel bei der oben beschriebenen Reinigung von Brauereikesseln durchgeführt werden. Hierbei wird der Tank zunächst leer gepumpt, anschließend wird mit dem beschriebenen Orbitalreiniger im Wechsel zunächst Wasser, Natronlauge, Desinfektionsmittel und anschließend Frischwasser als Spülwasser in den Kessel gepumpt.

Um den Reinigungsvorgang effektiv zu gestalten muss natürlich sichergestellt werden, dass die verwendeten Flüssigkeiten während des Sprühvorgangs des Orbitalreinigers sortenrein sind. Das bedeutet, dass zum Beispiel solange Natronlauge ein gesprüht wird, bis im Bereich des Abflusses festgestellt wird, dass die Konzentration an der Natronlauge der zugeführten Konzentration entspricht. Gleiches gilt für den Wechsel auf Desinfektionsmittel, Wasser und Spülwasser. Über die erfindungsgemäße Sensorik und das zugehörige Verfahren kann nun im Bereich des Abflusses ein z.B. kapazitiver Sensor vorgesehen werden, über den der Reinheitsgrad der Flüssigkeit überwacht wird.

Auf die oben beschriebene Weise kann jetzt solange mit der Natronlauge gespült werden, bis sich alle Rückstände von der Wandung des Kessels gelöst haben und der Sensor keine in der abschließenden Natronlauge befindlichen Fremdkörper mehr feststellen kann. Solche Fremdkörper würden nämlich aufgrund der anderen die Dielektrizitätskonstante ein abweichendes Signal verursachen. Gleiches gilt für eine Spülung mit Wasser, wobei die Verunreinigung des Wassers entweder aus dem Mischungsverhältnis mit Reststoffen oder aufgrund einer Schaumbildung des verunreinigten Wassers über die erste Ableitung beziehungsweise die zweite Ableitung des mäßigen als erkannt werden kann.

Ferner werden in den Tanks der Brauereitechnik, die beispielsweise einen Durchmesser von 9 m und einer Höhe von 30 m aufweisen können, Reinigungs- und spülen Flüssigkeiten während der Reinigung mit dem Orbitaireiniger bis zu einer Höhe von etwa einem Meter bei geschlossenem Abfluss aufgestaut. Nach dem Durchlauf des Reinigungszyklus wird das aufgestaute Medium wieder abgepumpt. Für eine möglichst schnelle Reinigung, der Reinigungsprozess unterbricht den Betrieb der Brauerei und muss daher möglichst kurz gehalten bleiben, ist dabei wichtig, dass die Pumpe, die das aufgestaute Medium abpumpt, nicht durch zu spätes Abschalten Luft zieht. Es ist also wichtig, dass der Sensor ein klares Signal zum Abschalten der Pumpe möglichst frühzeitig gibt, ohne dass das ablaufende Medium noch verunreinigt ist. Hierfür ist entscheidend, dass der Sensor zwischen wirklicher Verunreinigung und beispielsweise nicht störender Schaumbildung unterscheiden kann.

Über die Betrachtung der ersten und der zweiten Ableitung des Signals des Sensors kann nun ein Dynamikbereich definiert werden, innerhalb dessen davon ausgegangen wird, dass verunreinigte Flüssigkeit von der Pumpe über den Abfluss abgesogen wird. Gleichzeitig wird ein Schwellenwert der ersten oder zweiten Ableitung definiert, bei dessen erreichen davon ausgegangen wird, dass nun die Pumpe abgeschaltet werden kann.

Eine weitere Anwendung der Erfindung ermöglicht es, die Materialzusammensetzung des Medienstroms zu analysieren. So kann es beispielsweise bei einigen Reinigungsanwendungen notwendige sein, neben Wasser auch spezielle Reinigungsmittel, beispielsweise Terpene zu verwenden. Das Auftreten von Terpene verursacht einen Sensorausschlag des kapazitiven in Sensors von 15%. Das Auftreten von Wasser wiederum verursacht dagegen einen Sensorausschlag von 80%.

Nun können zwei Schwellenwerte festgesetzt werden, beispielsweise 25% und 65%, wobei unterhalb von 25% davon ausgegangen wird, dass es sich bei dem gemessenen Medium um Terpene handelt. Oberhalb von 65% wiederum wird davon ausgegangen, dass der Sensor mit Wasser in Kontakt gekommen ist. Der Erfindung wesentliche Vorteil ist nun die Tatsache, dass die Betrachtung der ersten oder zweiten Ableitung den Zustand der Sonde nur dann ändert, wenn der Messwert stabil ist, also keiner Änderungsgeschwindigkeit beziehungsweise keiner Änderung mehr unterliegt. Darüber hinaus ist das Signal wesentlich schneller auswertbar, so dass die Schaltzeiten des Sensors reduziert werden können.

Eine weitere mögliche Anwendung der Erfindung besteht darin, den so genannten Blasen-Effekt zu vermeiden. Bei der Befüllung von Behältern der Lebensmittelindustrie, insbesondere mit hochviskosen Medien, besteht die Gefahr, dass Luftblasen, die von dem Vorratsbehälter über die Befüllvorrichtung in den Behälter gelangen, in diesem schlagartig aufsteigen und ein Ventil auf der Oberseite des Behälters zum Aauslösen bringen. Bei der Auslösung reißt die Luftblase das Medium, in diesem Fall ein Lebensmittel mit, und der Behälter wird insteril und das abgefüllte Produkt muss vernichtet werden. Dies passiert insbesondere dann, wenn der Vorrat innerhalb des Vorratsbehälters zur Neige geht. Eine Sensorik muss also möglichst genau und schnell erkennen, dass Luftblasen über die Befüllungsvorrichtung in Richtung des Behälters gefördert werden.

Da die Luftblasen aber nur ein kleines Signal auslösen, würde bei der reinen Betrachtung zeitlichen Verlaufs des Sensorsignals nur eine sehr kleine Änderung des Messsignals erzeugt werden, die kaum zur Steuerung des Ablaufs verwendet werden kann und die je nach Medium unterschiedliche Pegel aufweisen kann.. Durch die Verwendung der ersten oder zweiten Ableitung dieses Signals wird es nun aber möglich, diese schnelle, kleine

Änderung identifizieren und so das Ende der Befüllung automatisch auslösen zu können, ohne dass dies bei teilweise befüllten Behältern durch die Störung infolge der Luftblase mit entsprechend unkontrollierbaren Teilbefüllungsgrad des aktuellen Behälters geschehen würde,

Eine weitere Anwendung der Erfindung besteht darin, bei einer Innenreinigung mit Sprühköpfen, also mit Reinigungsköpfen, die keinen Zielstrahl sondern eine Vielzahl vergleichsweise gerichteter Flüssigkeitsstrahlen emittieren, festzustellen, dass ein gewisser Flüssigkeitsstand im Tank erreicht ist. Durch die sehr hohe dynamische Komponente während dieses Reinigungsvorganges kann bei Betrachtung des zeitlichen Verlaufs des Signals kein eindeutiger Zeitpunkt festgelegt werden. Durch Heranziehen der ersten oder zweiten Ableitung dagegen, können stabile Bereiche von nicht stabilen Bereichen sicher getrennt werden, so dass beispielsweise der Zustand "ansprühen der Sonde durch den Reinigungskopf' von dem Erreichen des Flüssigkeitspegels aufgrund der unterschiedlichen dynamischen Verläufe unterschieden werden kann.

Eine letzte Anwendung der Erfindung liegt schließlich darin, bei der Reinigung von Bierfässer das Auftreten von Reinigungsflüssigkeiten zu bestimmen. Nach dem Reinigung Vorgang werden wir Fässer üblicherweise mit feuchten, sterilem Dampf ausgeblasen. Anschließend wird mittels Druckluft dass sich in dem Fass niedergeschlagene Kondensat ausgetrieben, wobei für die Qualität des Bieres wesentlich ist, dass anschließend das Fass nahezu kondensatfrei ist.

Erfindungsgemäß wird nun im Abfluss für das Kondensat ein kapazitiver Sensor vorgesehen, der den dynamischen Wechsel des Kondensatgehaltes in der ausgeblasen Luft ermittelt. Hierzu wird mittels der ersten Ableitung des Eingangssignals die Integration aller folgenden Messwerte gestartet. Nach dem Passieren des Kondensats fällt das Eingangssignal dann wieder auf den Ursprungswert zurück und die. Integration wird gestoppt. Das Ergebnis in der Integration ist dann, mit einer gewissen Toleranz, äquivalent zur Kondensatsmenge.

Zusammenfassend kann durch die erfindungsgemäße Betrachtung der ersten und zweiten Ableitung des Messsignals nun leicht ein Schwellenwert definiert werden, der eindeutige Schaltzustände ermöglicht. Ferner kann durch die Betrachtung der zeitlichen Veränderung beziehungsweise der Änderungsgeschwindigkeit des Signals eine Aussage über die Viskosität einer den Sensor benetzenden Flüssigkeit getroffen werden.

Weitere Merkmale und Vorteile der Erfindung ergeben sich aus den Unteransprüchen und aus der nachfolgenden Beschreibung der oben beschriebenen Überwachungsaufgaben in der Brauereitechnik als bevorzugte Ausführungsbeispiele anhand der Zeichnungen.

### Kurze Beschreibung der Zeichnungen

In den Zeichnungen zeigen
- Figur 1: in schematischer Darstellung einen Behälter oder Tank mit einer Behälterreinigungsvorrichtung und einer Sensoreinrichtung,
- Figur 2: in vergrößerter Darstellung den oberen Bereich der in Figur 1 dargestellten Vorrichtung,
- Figur 3: eine erste Ausgestaltung eines als Orbitalreiniger ausgebildeten Düsenkopfes,
- Figur 4: eine zweite Ausgestaltung eines als Orbitalreiniger ausgebildeten Düsenkopfes,
- Figur 5: eine dritte Ausgestaltung eines als Zielstrahl- oder Orbitalreiniger ausgebildeten Düsenkopfes,
- Figur 6: eine vierte Ausgestaltung eines als Zielstrahl- oder Orbitalreiniger ausgebildeten Düsenkopfes,
- Figur 7: eine fünfte Ausgestaltung eines als Schwallreiniger ausgebildeten Düsenkopfes,
- Figur 8: eine sechste Ausgestaltung eines als statischen oder rotierenden Sprühkopfes ausgebildeten Düsenkopfes,
- Figur 9: eine erste Ausgestaltung eines Sensors,
- Figur 10: eine zweite Ausgestaltung eines Sensors,
- Figur 11: eine dritte Ausgestaltung eines Sensors,
- Figur 12: eine vierte Ausgestaltung eines Sensors,
- Figur 13: den Signalverlauf eines kapazitiven Sensors nach einer der Figuren 9 bis 12 bei Verwendung eines Sprühkopfes in einem Kessel,
- Figur 14: die erste Ableitung des Signalverlaufs aus Figur 13,
- Figur 15: die zweite Ableitung des Signalverlaufs aus Figur 13,
- Figur 16: den Signalverlauf eines kapazitiven Sensors nach einer der Figuren 9 bis 12 bei Verwendung eines Zielstrahlkopfes in einem Kessel,
- Figur 17: die erste Ableitung des Signalverlaufs aus Figur 16,
- Figur 18: die zweite Ableitung des Signalverlaufs aus Figur 16,
- Figur 19: den Signalverlauf eines kapazitiven Sensors nach einer der Figuren 9 bis 12 bei Verwendung als Blasendetektor in der Zuführung zu einem Behälter der Lebensmittelindustrie,
- Figur 20: die erste Ableitung des Signalverlaufs aus Figur 19,
- Figur 21: die zweite Ableitung des Signalverlaufs aus Figur 19,
- Figur 22: den Signalverlauf S(t) eines Sensors mit Ein- und Abschaltpunkt für ein digitales Signal und
- Figur 23: die erste Ableitung des Signalverlaufs aus Figur 22.

### Wege zur Ausführung der Erfindung

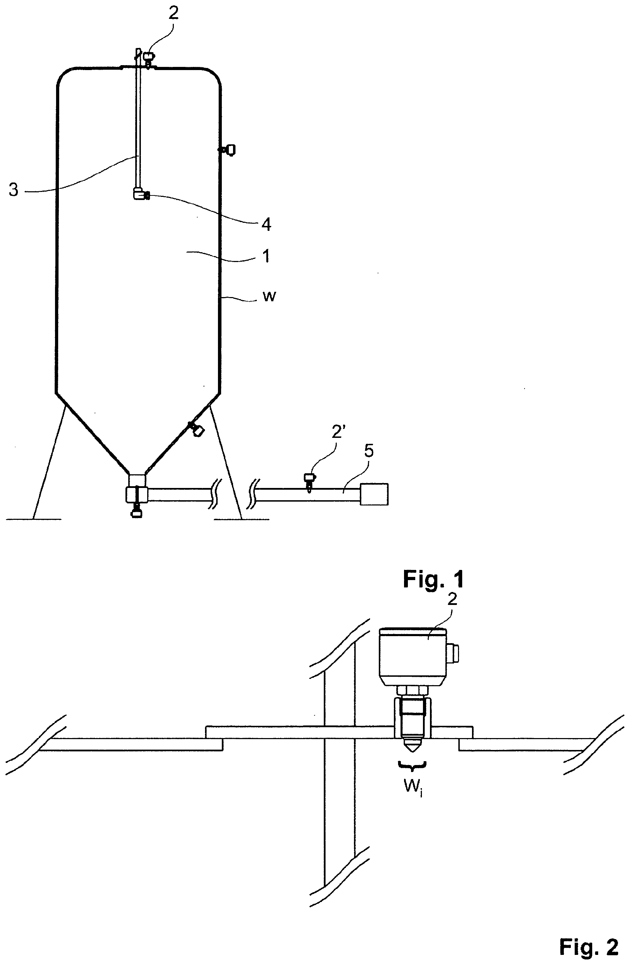

In Figur 1 ist ein kesselförmiger Behälter 1 dargestellt, wie er üblicherweise in der Brauerei Technik verwendet wird. Der Behälter 1 weist in seinem oberen Bereich eine Befüllöffnung auf, die im dargestellten Zustand genutzt wurde, um zu Reinigungszwecken eine Behälterreinigungsvorrichtung 5 in den Behälter 1 einzusetzen. Die Behälterreinigungsvorrichtung 5 weist an ihrem unteren Ende einen hier als Sprühkopf ausgebildeten Kopf 4 mit einer Düse auf, wobei aus der Düse Reinigungsflüssigkeit auf die Behälterwand W gerichtet wird.

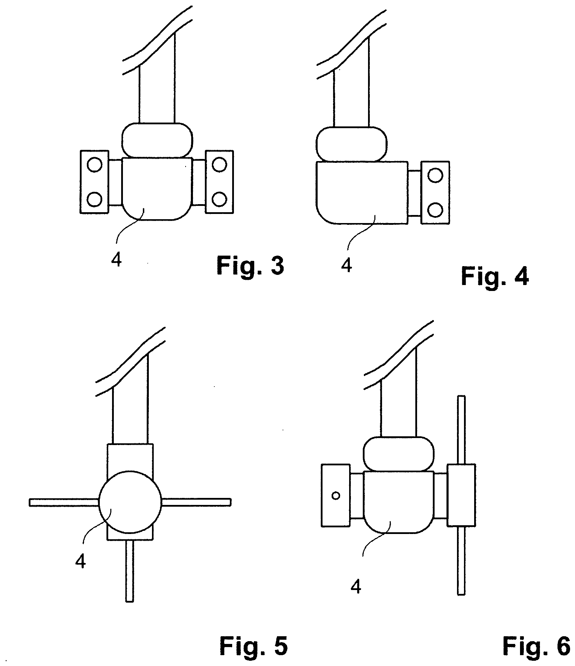

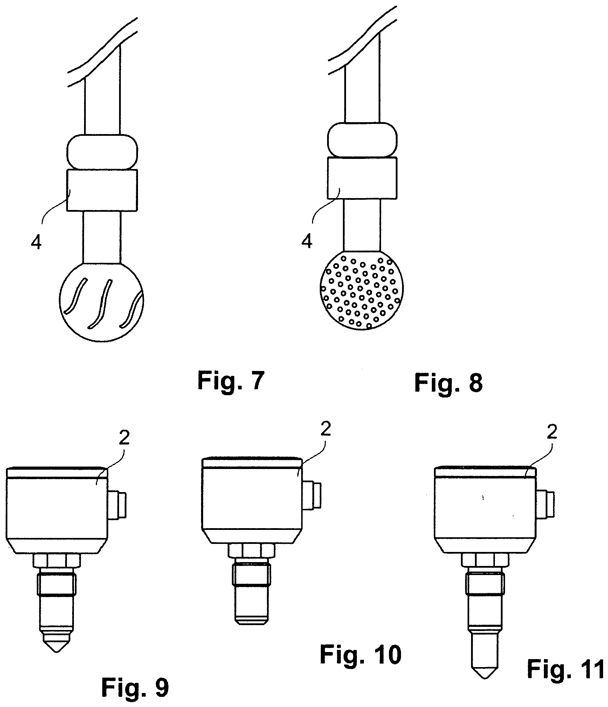

Mögliche Köpfe 4 sind in den Figuren 3 bis 8 dargestellt. Je nach Anforderung und Wunsch des Anwenders können die in den Figuren 3 und 4 dargestellten Orbitalreiniger, oder die in den Figuren 5 und 6 dargestellten, als Orbitalreiniger oder Zielstrahlreiniger einsetzbaren Köpfe 4, oder auch die in den Figuren 7 und 8 dargestellten, rotierenden oder statischen Schwallreiniger beziehungsweise Sprühköpfe eingesetzt werden.

Wichtig für die wirksame Reinigung des innenraums des Behälters 1 ist nun die Tatsache, dass das Auftreffen der Reinigungsflüssigkeit mit dem gewünschten Druck von den Sensor 2 wirksam erkannt werden kann. Hierbei muss die Sensorik in der Lage sein, das unbeabsichtigte Treffen von Reinigungsflüssigkeit auf den Sensor 2, zum Beispiel durch Spritzer oder ablaufende Flüssigkeit aus einem oberen Bereich, von dem gewollten Auftreffen zum Beispiel des Zielstrahls auf die Messfläche wᵢ zu unterscheiden.

in Figur 2 ist der Bereich der Messfläche wᵢ in einer vergrößerten Darstellung gezeigt. Bei dieser Ausgestaltung des Behälters 1 ist zur Vermeidung von Störungen in der Behälterwand W der Sensor 2 im Bereich des Einsatzes der Reinigungsvorrichtung 4 angeordnet. Alternativ kann der Sensor 2 auch an jeder anderen Stelle der Behälterwandung W, je nach örtlicher Möglichkeit angeordnet werden. Mit der Messfläche w₁ ragt der Sensor 2 ein kleines Stück in den Behälter 1 hinein, so dass der Zielstrahl bei Passieren des oberen Bereichs des Behälters 1 auf die Messfläche wᵢ auftreffen muss. Mögliche Ausgestaltungen von verwendeten Sensoren 2 zeigen die Figuren 9 bis 12.

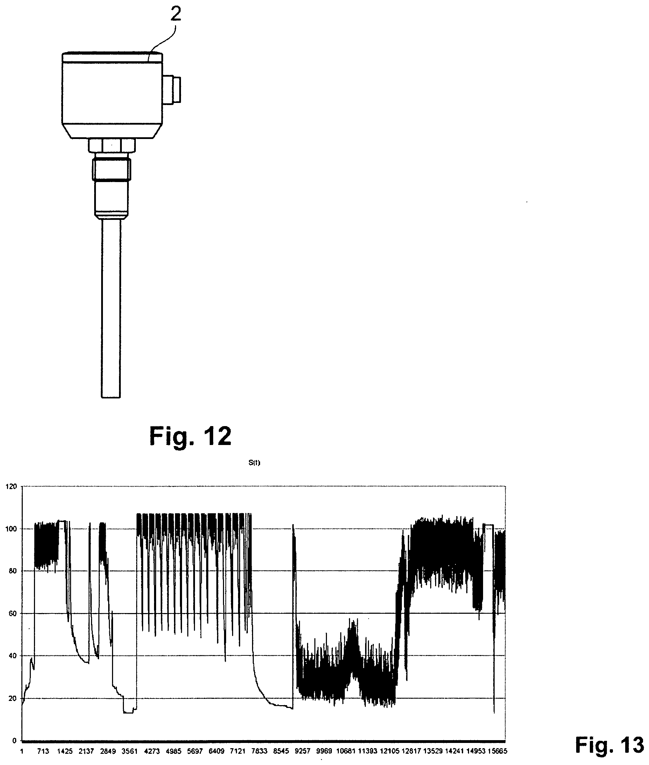

In Abhängigkeit von dem verwendeten Reinigungskopf 4 wird nun das Signal des Sensors 2 eine unterschiedliche Dynamik aufweisen. Trifft zum Beispiel bei Verwendung eines Sprühkopfes ein sich im Behälter 1 verteilender Regen auf den Sensor auf, kann beispielsweise das in Figur 13 dargestellte Signal aufgenommen werden. Wie der Figur 13 zu entnehmen ist, ist dieses Signal durch eine Vielzahl von Ausschlägen charakterisiert, so dass es schwer bis nahezu unmöglich ist, festzustellen, warum der Sensor 2 an dem einzelnen Punkt ein Signal ausgegeben hat. Insbesondere ist es kaum möglich, zwischen anhaftender, tropfender Reinigungsflüssigkeit an der Messfläche wᵢ und einem Treffen der Messfläche wᵢ durch die Reinigungsflüssigkeit zu unterscheiden.

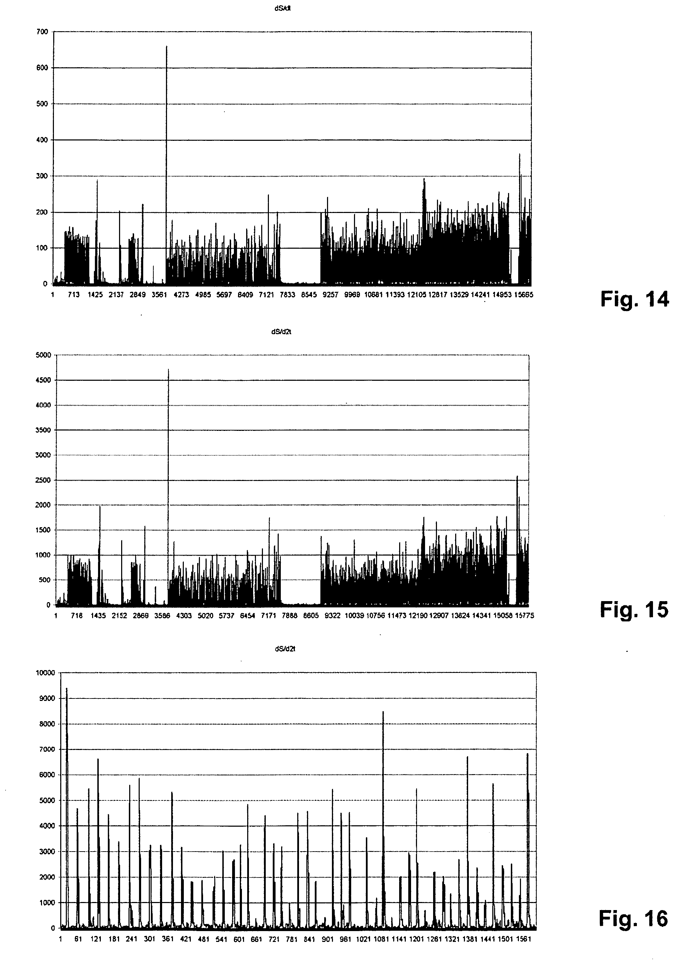

Durch die Betrachtung der ersten Ableitung des Signals des Sensors 2 kann wesentlich klarer dargestellt werden, warum ein Sensorsignal zu Stande gekommen ist. Die von dieser ersten Ableitung gebildete Änderungsgeschwindigkeit des Signals ist in Figur 14. dargestellt. Figur 15 zeigt die zweite Ableitung des Sensorsignals. Hier ist gut zu erkennen, dass die ersten Ausschläge bei Auftreffen von Reinigungsflüssigkeit wesentlich früher auftreten als bei den beiden anderen Darstellungen aus Figur 13 oder 14. hierbei ist zu beachten, dass in Figur 15 ein anderer Maßstab verwendet wurde, so dass für die Elektronik in Wirklichkeit der Ausschlag wesentlich deutlicher ist.

Figur 16 zeigt eine Darstellung des Messsignals eines Sensors 2 auf den Reinigungsflüssigkeit aus einem als Zielstrahlreiniger ausgebildeten Kopf 4 auftrifft. Im Vergleich zu den vorherigen Abbildungen fällt auf, dass das Signal des Sensors 2 wesentlich weniger verrauscht ist, da die Reinigungsflüssigkeit wesentlich zielgerichteter ausgebracht wird.

Die erfindungsgemäße Möglichkeit der Signalauswertung bzw. die hierzu aufgebaute Anlage ermöglicht nun genau festzustellen, ob der Orbitalreiniger ordnungsgemäß arbeitet oder ob Düsen verstopft sind. Hierzu muss das Auftreffen des Reinigungsstrahls erkannt werden und mit einem zeitlichen Erwartungszustand verglichen werden. Gleichzeitig muss die Elektronik erkennen, ob das vermeintliche Signal tatsächlich von dem direkten Auftreffen der Reinigungsflüssigkeit stammt oder ob nicht eine benachbarte Düse einen Sprühnebel verursacht hat oder ob Tropfen von der Wandung w bzw. dem Sensor 2 ablaufen und den Sensor 2 benetzen.

Der Sensor erzeugt ein elektrisches Wechselfeld (I). Die zeitliche Änderung de/dt dieses Wechselfeldes wird von der Signalverarbeitungseinrichtung erfasst und zur Erzeugung eines zeitveränderlichen Signals S(t) herangezogen, wobei im Verlauf einer aufsteigenden Flanke F des Signals S(t) an und/oder oberhalb eines ersten Schwellenwertes (dS/dt)_{Gi} des Gradienten des Signals dS/dt jeweils ein Einschaltpunkt E für ein digitales Ausgangssignal für die Steuerung der Überwachung der Beschwallung generiert wird.

Die Düsen bringen die Flüssigkeitsstrahlen einer Reinigungsflüssigkeit aus, wobei eine direkte Beschwallung der Elektrode des Sensors 2 in Richtung ihrer Längsachse mit einem signalauslösenden Flüssigkeitsstrahl nur in einer dort dargestellten ausgezeichneten Position der Behälterreinigungsvorrichtung und nur mit einer bestimmten einzigen Düse und im Verlauf des gewählten Spritzmusters und nicht mit jeweils allen Düsen möglich ist.

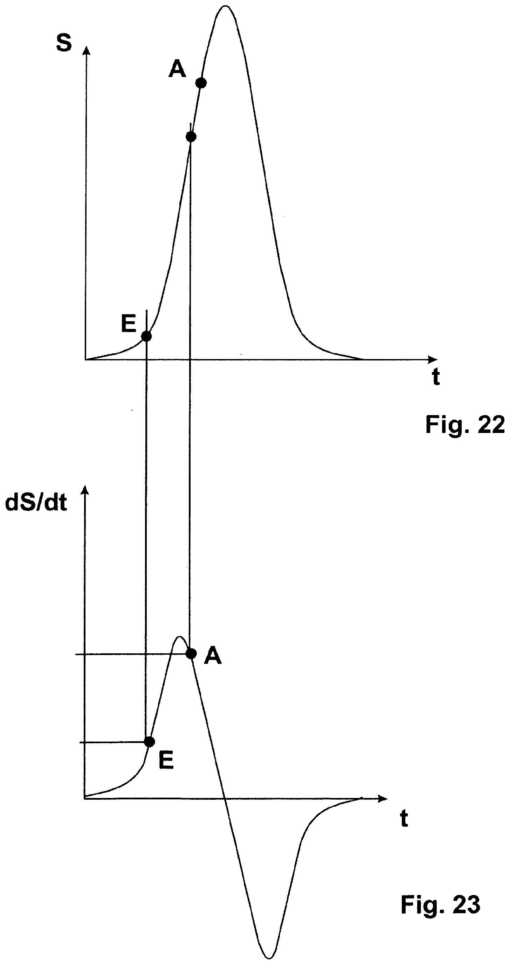

Die Überwachung der Beschwallung im Sinne der erfindungsgemäßen Aufgabenstellung ist für einen Orbitalreiniger, bei dem eine einzige Düse um die erste Drehachse umläuft (sog. Zielstrahlreiniger), in den Figuren 16 bis 18 dargestellt. Der signalauslösende Flüssigkeitsstrahl generiert beispielsweise durch die erste Düse das zeitveränderliche Signal S(t), das über der Zeit t aufgetragen ist (Figur 16). Im Verlauf einer aufsteigenden Flanke F des Signals S(t) wird an und/oder oberhalb eines ersten Schwellenwertes (dS/dt)_{G}, nach Maßgabe der Darstellung in den Figuren 22 und 23 ein Einschaltpunkt E für ein digitales erste Ausgangssignal yi generiert. Im Ausführungsbeispiel wird diesbezüglich das digitale erste Ausgangssignal von yᵢ = 0 auf yᵢ = 1 gesetzt, was beispielsweise auch bedeuten kann, dass der Schaltausgang von OV (low Pegel) auf 24 VDC (high Pegel) schaltet. Gleichzeitig startet der Einschaltpunkt E eine erste Überwachungszeit t*, die größer als die Umlaufzeit Tₒ eines Flüssigkeitsstrahls ist.

Falls die Düse keinen signalauslösenden Flüssigkeitsstrahl C mehr ausbringt, weil sie beispielsweise verstopft ist, der Reinigungsflüssigkeitszufluss an anderer Stelle gestört ist oder kein hinreichender Flüssigkeitsdruck vor der Düse vorliegt, wird demzufolge innerhalb der laufenden ersten Überwachungszeit t' nicht wenigstens ein weiterer Einschaltpunkt E generiert. In diesem Falle wird das digitale erste Ausgangssignal yᵢ auf Null gesetzt und eine Fehlermeldung und/oder ein Steuersignal ausgelöst.

Sind weitere, um die Drehachse umlaufende Düsen vorgesehen, die gegenüber der ersten Düse in einem zeitlichen Abstand AT₁ bzw. AT₂ umlaufen, wird in adäquater Weise bei der Überwachung verfahren. Hat die erste Düse nach Generierung des ersten Einschaltpunktes E keinen Durchfluss, dann werden, wie dies die erfindungsgemäße Überwachung verlangt, nicht wenigstens so viele weitere Einschaltpunkte E generiert, wie voneinander unabhängige, umlaufende Flüssigkeitsstrahlen vorliegen. In diesem Falle wird das digitale erste Ausgangssignal yₗ auf Null gesetzt mit den sich ergebenden, genannten Konsequenzen.

Erfindungsgemäß generiert jeder Einschaltpunkt E ein digitales zweites Ausgangssignal Y2, das vorzugsweise als Impuls mit einer definierten zeitlichen Länge /lt (Impulsdauer beispielsweise 400 ms) ausgebildet ist, der von einer speicherprogrammierbaren Steuerung SPS verarbeitbar ist. Gleichzeitig startet jeder Einschaltpunkt E eine zweite Überbrückungszeit T*, die größer als die Umlaufzeit To eines Flüssigkeitsstrahls oder eine andere dessen zyklischen Umlauf kennzeichnende Zeit Tₒ' ist. im vorliegenden.Falle wird nun für den dargestellten ordnungsgemäßen Betrieb des Orbitalreinigers die Anzahl der innerhalb der jeweiligen zweiten Überbrückungszeit T* festgestellten digitalen zweiten Ausgangssignale y₂ gezählt und es wird für eine vorgegebene Überwachungszeit, die sich im vorliegenden Falle aus der gesamten dargestellten Signalfolge ergeben soll, die Summe aller dieser Ausgangssignal y₂ gebildet. Im Ausführungsbeispiel gewinnt man hierfür die Summe von 35 Impulsen.

Nunmehr sei angenommen, dass die zweite Düse nach dem ersten Einlangssignal E im Durchfluss gestört sei. Das erfindungsgemäße zweite Überwachungsverfahren liefert nunmehr in der entsprechenden Überwachungszeit eine Summe von 17 Impulsen. Nunmehr wird diese Anzahl mit der die ordnungsgemäße Beschwaliung der Wandfläche W kennzeichnenden Anzahl verglichen. Bei Überschreiten einer vorgegebenen Differenz der jeweiligen Anzahlen in dem bestimmten Überwachungszeitraum werden eine Fehlermeldung und/oder ein Steuersignal ausgelöst.

Damit ist gezeigt, dass das vorgeschlagene zweite Überwachungsverfahren bei sehr komplexer Geometrie die Spritzmusters L, eine deutliche Aussage darüber treffen kann, ob der Orbitalreiniger ordnungsgemäß arbeitet, d.h. ob die planmäßige Drehzahl gegeben ist und ob alle Düsen Flüssigkeitsstrahlen mit dem notwendigen Durchfluss ausbringen. Das vorgeschlagene Auswertungsverfahren des Signalverlaufs steht lediglich stellvertretend für weitere Zählverfahren und Auswahlkriterien für die vorliegenden digitalen zweiten Ausgangssignale y₂ (Impulse).

Die Generierung des Einschaltpunktes E für das digitale Ausgangssignal y bzw. yᵢ, y₂ für die Steuerung der Überwachung der Beschwallung im Verlauf eines vereinfacht und schematisch dargestellten zeitveränderlichen analogen Signals S(t) zeigen die Figuren 22 und 23. Im Verlauf der aufsteigenden Flanke F des Signals S(t) an und/oder oberhalb des ersten Schwellenwertes (dS/dt)_{Gi}, der im Verlauf des Gradienten dSIdt des zeitveränderlichen Signals S(t) markiert ist, wird jeweils dieser Einschaltpunkt E generiert.

Im weiteren Verlauf der aufsteigenden Flanke F und, zeitlich gesehen, nach einem positiven Steigungsmaximum gᵢ des Signals S(t) im Bereich der markierten Punkte 2 und 3, an und/oder unterhalb eines zweiten Schwellenwertes (dS/dt)_{G2} wird jeweils ein Ausschaltpunkt A für das digitale Ausgangssignal y bzw. y₁, y₂ für die Steuerung der Überwachung der Beschwallung generiert, falls dies steuerungstechnisch von Vorteil ist.

Darüber hinaus gibt der Betrag der Signalhöhe zwischen dem Ein- und dem Ausschaltpunkt E bzw. A eine Information über die stoffliche Eigenschaft der die ausgewählte Fläche wi* jeweils beschwallenden Reinigungsflüssigkeit R, wobei beispielsweise ein Signal erster Höhe S₁ und/oder ein Signal zweiter Höhe S₂ zur Verfügung steht.

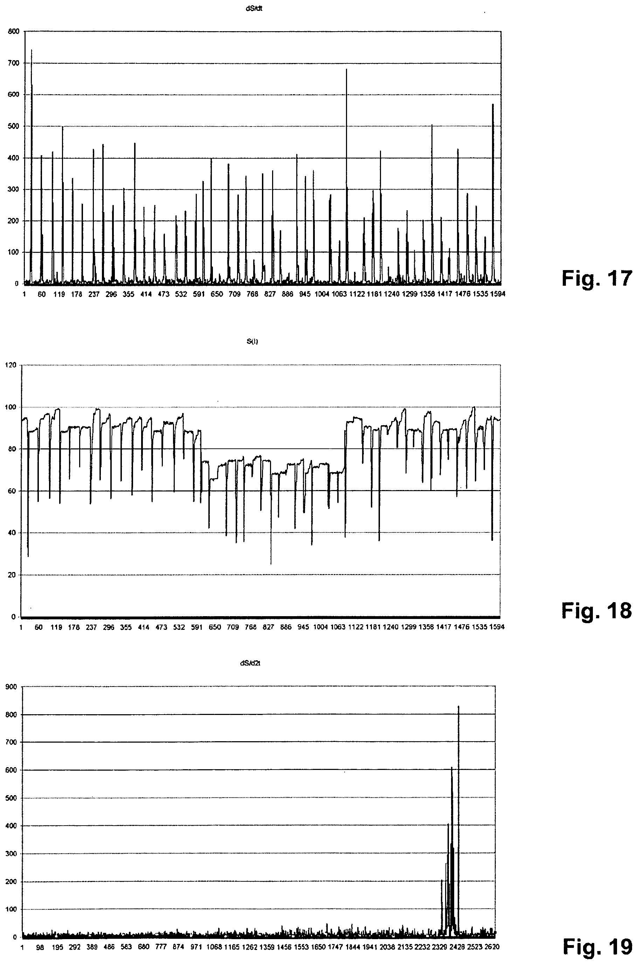

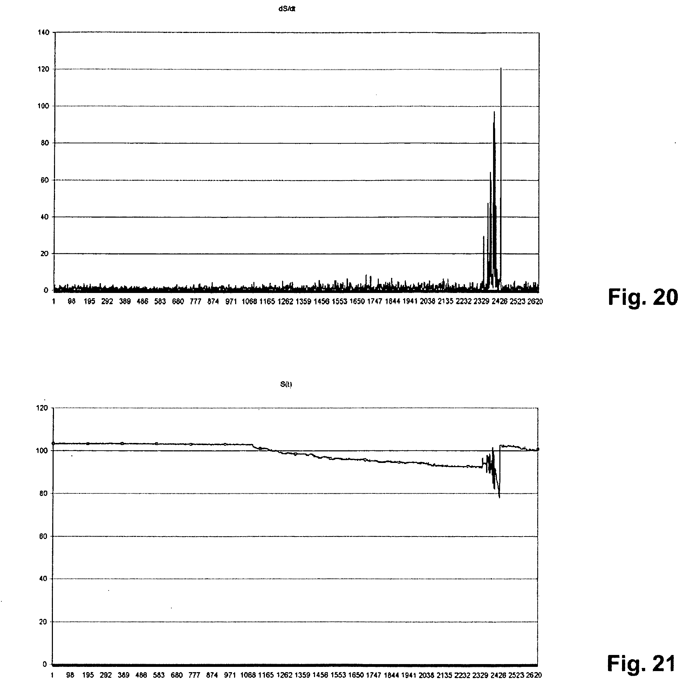

In den Figuren 19 bis 21 ist das Signal eines Sensors dargestellt, der in der Zuführleitung eines zu erfüllenden Behälters in der Lebensmittelindustrie eingesetzt ist. Auch hier handelt es sich um einen kapazitiven Sensor. Dieser Sensor hat die Aufgabe, Luftblasen, die sich bei Entleeren des Vorratstanks in Richtung des Behälters zusammen mit dem Medienstrom bewegen könnten, zu erkennen und die Zufuhr abzuschalten. Wie Figur 19 zu entnehmen ist, verursacht eine solche Luftblase nur einen sehr geringen Signalausschlag. Figur 20 und 21 zeigt dagegen (beachte auch hier den Maßstab) das die Betrachtung der Änderungsgeschwindigkeit des Signals beziehungsweise noch deutlicher die Betrachtung der zweiten Ableitung des Signals dazu führt, dass die Signaländerung wesentlich schneiler und einfacher erkennbar ist. Durch einen sehr schnellen Ausschlag der ersten und erst recht der zweiten Ableitung kann ein Einschaltpunkt, der ein digitales Signal als Zeichen für eine Störung einschaltet, frühzeitig gesetzt werden.

## Patentansprüche

1. Verfahren zur Auswertung eines Signals S(t) zur Bestimmung der Präsenz, der Zusammensetzung oder des Zustandes eines flüssigen oder festen Mediums oder eines Gemisches solcher Medien durch Auswertung eines von einer von einem kapazitiven Sensor gebildeten oder einen kapazitiven Sensor umfassenden Sensoreinrichtung zur Verfügung gestellten, sich zeitlich sprungartig oder kontinuierlich verändernden Signals S(t), das für die Präsenz oder die Materialeigenschaften des Mediums signifikant ist, an einer, eine Messposition bildenden Messstelle wᵢ, die an der Innenseite einer Wandfläche eines Tanks (1), eines sonstigen Behälters oder einer Leitung angeordnet ist, wobei
• das Signal S(t) an der Messstelle wᵢ aufgenommen und ausgewertet wird, und
• zur Auswertung des Signals S(t) dieses Signal elektronisch aufbereitet wird und
• die durch den Eintritt des Mediums oder des Mediengemisches eintretende zeitliche Änderung dS/dt des Signals S(t) oder die Änderungsgeschwindigkeit der zeitlichen Änderung des elektrischen Wechselfeldes d²S/dt² als charakteristisches Signal S(t) erfasst und ausgewertet wird,
**dadurch gekennzeichnet, dass**
• die in der Messstelle wᵢ befindlichen Anteile des Mediums oder Mediengemisches einem mit einer Frequenz zwischen 80 MHz und 200 MHz betriebenen, hochfrequenten, elektrischen Wechselfeld Ø ausgesetzt werden, so dass sie hierdurch eine Polarisation erfahren,
• die durch die Polarisation eintretende zeitliche Änderung des elektrischen Wechselfeldes dØ/dt oder die Änderungsgeschwindigkeit der zeitlichen Änderung des elektrischen Wechselfeldes d²Ø/dt² als auszuwertendes Signal S(t) erfasst wird und
• im Verlauf einer aufsteigenden Flanke F des Signals S(t) an und/oder oberhalb bzw. unterhalb eines ersten Schwellenwertes dS/dt_{G1} bzw. d²S/dt²_{G1} jeweils ein Einschaltpunkt E für ein digitales Ausgangssignal (y; y₁, y₂) für die Auswertung der Präsenz des Mediums oder des Medienstromes generiert wird.

2. Verfahren zur Auswertung eines Signals S(t) nach Anspruch 1, **dadurch gekennzeichnet, dass** der Verlauf der auf- und/oder absteigenden Flanken F des Signals S(t) mit Schwellenwerten dS/dt_{G1} bzw. d²S/dt²_{G1} verglichen wird und als charakteristische Größe zur Auswertung eines Signals S(t) das Unter- bzw. Überschreiten eines Schwellenwertes dS/dt_{G1} bzw. d²S/dt²_{G1} als Einschaltpunkt E oder Ausschaltpunkt (A) für ein digitales Ausgangssignal (y; y₁, y₂) für die Auswertung des Signals S(t) herangezogen wird.

3. Verfahren zur Auswertung eines Signals S(t) nach Anspruch 1, **dadurch gekennzeichnet, dass** zur Auswertung des Signals S(t) der absolute Wert des Signals S(t) herangezogen wird.

4. Verfahren zur Auswertung eines Signals S(t) nach Anspruch 1 oder 2, **dadurch gekennzeichnet, dass** zur Auswertung des Signals S(t) der Betrag des Signals S(t) herangezogen wird.

5. Verfahren nach einem der vorhergehenden Ansprüche, **dadurch gekennzeichnet, dass** das hochfrequente Wechselfeld Ø mit einer Frequenz 90 MHz und 140 MHz und bevorzugt zwischen 100 MHz und 110 MHz betrieben wird.

6. Verfahren nach einem der vorhergehenden Ansprüche, **dadurch gekennzeichnet, dass** die Taktzeit, zu der das Signal S(t) zur Auswertung aufgenommen wird, weniger als 100 ms, insbesondere zwischen 50 ms und 80 ms beträgt und insbesondere besonders bevorzugt 70 ms beträgt.

7. Verfahren nach einem der vorhergehenden Ansprüche, **dadurch gekennzeichnet, dass** zur Auswertung des Signals S(t) ein durch Polarisation entstehender kapazitiver Anteil des gemessenen Signals S(t) und ein durch Ionenleitung über das Medium oder den Medienstrom entstehender Anteil bestimmt wird, wobei die Aufteilung des Signals S(t) auf die Anteile über die Bestimmung der Veränderungsgeschwindigkeit des Signals S(t) erfolgt und eine schnelle Veränderung des Messsignals einer verstärkten Ionenleitung zugerechnet wird, um so stark leitende Medien von weniger stark leitenden Medien mit ähnlichen dielektrischen Eigenschaften zu unterscheiden.

8. Verfahren nach einem der vorhergehenden Ansprüche, **dadurch gekennzeichnet, dass** die Breite der Flanke F des Signals S(t) als Maß für die Benetzung und/oder das Anhaften von Medium an der Sensoreinrichtung (2) bzw. eines Teils hiervon herangezogen wird.

9. Verfahren nach einem der vorhergehenden Ansprüche, **dadurch gekennzeichnet, dass** zur Kontrolle des Strömungs- und Fließverhaltens eines Medienstroms längs der Wandfläche, insbesondere zur Bestimmung der Blockade einer Rohrleitung, das Signal S(t) an der Messstelle wᵢ erfasst wird und bei einem zeitlich konstanten Signal S(t) ein Alarmsignal ausgegeben wird.

10. Verfahren einem der vorhergehenden Ansprüche, **dadurch gekennzeichnet, dass** die Häufigkeit des Auftretens einer aufsteigenden Flanke F des Signals S(t) als Maß für eine Turbulenz in der Strömung herangezogen wird.

11. Verfahren nach einem der vorhergehenden Ansprüche, **dadurch gekennzeichnet, dass** die Viskosität des Mediums anhand der Änderungsgeschwindigkeit des Signals S(t) bestimmt wird, wobei eine geringere Geschwindigkeit des abklingenden Signals als Indikator für eine Flüssigkeit mit höherer Viskosität angesehen wird.

12. Verfahren zur Kontrolle des Abflusses von Reinigungsflüssigkeit, insbesondere eines Tanks, über eine Pumpvorrichtung, **dadurch gekennzeichnet, dass** die Pumpvorrichtung über eine Abschaltautomatik abgeschaltet wird, wenn kein konstanter Medienstrom mehr detektierbar ist, wobei im Bereich eines Behälterbodens oder des Abflusses zumindest eine Sensorvorrichtung (2) angeordnet ist und wobei der Zustand und die Präsenz des Stromes des abfließenden Mediums nach einem der Ansprüche 1 bis 8 bestimmt wird.

13. Verfahren nach dem vorhergehenden Anspruch, **dadurch gekennzeichnet, dass** die Signalverarbeitung eine digitale Schaltung umfasst, die nach Auswertung des Signals S(t) bei Überschreiten eines Schwellenwertes der zeitlichen Änderung dS/dt des Signals S(t) oder die Änderungsgeschwindigkeit der zeitlichen Änderung d²S/dt² bis zum Überschreiten eines weiteren Schwellenwertes der Beträge dieser Signale ein konstantes Signal S_{Max} als charakteristisches Signal für den abgerissenen oder diskontinuierlichen Medienstrom und bei zeitlicher Konstanz dieser Signale über ein vorbestimmtes Intervall nachfolgend ein zweites konstantes Signal S_{Min} als charakteristisches Signal für den kontinuierlichen oder nicht vorhandenen Medienstrom ausgibt, wobei die Pumpe zumindest bei einem Wechsel von dem Signal S_{Max} zu dem Signal S_{Min} abgeschaltet wird.

14. Verfahren zur Detektion von Fremdstoffen oder Gasblasen im Zufluss eines verfahrenstechnischen Behälters, insbesondere eines Tanks, **dadurch gekennzeichnet, dass** in einer Zuführung eine Sensoreinrichtung (2) angeordnet wird, wobei ein Signal S'(t) des Sensors durch Analyse der zeitlichen Änderung dS/dt oder der Änderungsgeschwindigkeit der zeitlichen Änderung d²S/dt² nach einem Verfahren mit den Verfahrensschritten nach einem der Ansprüche 1 bis 8 gewonnen wird und bei Auftreten eines Signalausschlags des Signals S'(t) von dem Vorhandensein einer Gasblase ausgegangen wird.

15. Verfahren nach einem der vorhergehenden Ansprüche, **dadurch gekennzeichnet, dass** eine Elektrode (2.1) verwendet wird, die endseitig zunächst einen zylindrischen Teil (2.1a) aufweist, der in einen kegelförmigen Teil (2.1b) übergeht und im Innenraum des Behälters (1) spitz endet.

## Claims

1. Method for evaluating a signal S(t) for determining the presence, the composition or the condition of a liquid or solid medium or a mixture of such media by evaluating a signal S(t), changing in stages or continuously over time, provided by a sensor means formed by a capacitive sensor or comprising a capacitive sensor, which is significant for the presence or the material characteristics of the medium, at a measuring point wᵢ forming a measuring position arranged on the inside of a wall surface of a tank (1), another container or a pipe, wherein
• the signal S(t) is recorded and evaluated at the measuring point wᵢ, and
• this signal is electronically processed for evaluating the signal wᵢ, and
• the time change dS/dt of the signal S(t) or the change speed of the change of the electronic alternating field d²S/dt² occurring over time upon entry of the medium of the medium mixture is recorded and evaluated as the characteristic signal S(t),
**characterised in that**
• the parts of the medium or medium mixture located at measuring point wᵢ are exposed to a high-frequency electric alternating field Ø at a frequency of between 80 MHz and 200 MHz, and are thus exposed to polarisation,
• the time change in the electric alternating field dØ/dt or the change speed of the change in the electric alternating field d²Ø/dt² over time that occurs following polarisation is recorded as a signal S(t) to be evaluated, and
• a switch-on point E each is generated for a digital output signal (y; y₁, y₂) for evaluating the presence of the medium or the medium stream along the rising flank F of the signal S(t) and/or above or below a first threshold value dS/dt_{G1} or d²S/dt²_{G1}.

2. Method for evaluating a signal S(t) according to claim 1, **characterised in that** the path of the rising and/or falling flank F of the signal S(t) is compared with threshold values dS/dt_{G1} or d²S/dt²_{G1} and a shortfall or exceedance of the threshold value dS/dt_{G1} or d²S/dt²_{G1} is used as switch-on point E or switch-off point (A) for a digital output signal (y; y₁, y₂) for output signal S(t) as a characteristic parameter for evaluating a signal S(t).

3. Method for evaluating a signal S(t) according to claim 1, **characterised in that** the absolute value of signal S(t) is used for evaluating the signal S(t).

4. Method for evaluating a signal S(t) according to claim 1 or 2, **characterised in that** the sum of signal S(t) is used for evaluating the signal S(t).

5. Method according to one of the preceding claims, **characterised in that** the high-frequency alternating field Ø is operated at a frequency of between 90 MHz and 140 MHz, and preferably between 100 MHz and 110 MHz.

6. Method according to one of the preceding claims, **characterised in that** the cycle time at which the signal S(t) is recorded for evaluation is less than 100 ms, preferably between 50 ms and 80 ms, and particularly preferably 70 ms.

7. Method according to one of the preceding claims, **characterised in that** a capacitive part of the measured signal S(t) created through polarisation and a part created through ionic conduction across the medium or the medium stream are determined for evaluating the signal S(t), wherein the division of the signal S(t) into these parts is realised by determining the change speed of the signal S(t) and a rapid change of the measurement signal is attributed to increased ionic conduction in order to differentiate between strongly conductive media and less strongly conductive media with similar dielectric characteristics in this way.

8. Method according to one of the preceding claims, **characterised in that** the width of flank F of signal S(t) is used as a measure for wetting and/or adhesion of medium to the sensor means (2) or a part thereof.

9. Method according to one of the preceding claims, **characterised in that** the signal S(t) is recorded at measuring point wᵢ for controlling the streaming and flow features of a medium stream along the all surface, in particular for determining the blockage of a pipeline, and an alarm signal is issued when signal S(t) is constant over time.

10. Method according to one of the preceding claims, **characterised in that** the frequency of the occurrence of a rising flank F of signal S(t) is used as a measure of turbulence in the stream.

11. Method according to one of the preceding claims, **characterised in that** the viscosity of the medium is determined by means of the change speed of the signal S(t), wherein a lower speed of the falling signal is considered an indication of a liquid with a higher viscosity.

12. Method for controlling the drainage of cleaning fluid, in particular from a tank, by means of a pump device, **characterised in that** the pump device is switched off by means of automatic shutoff when a constant medium stream is no longer detectable, wherein at least one sensor device (2) is arranged in the area of a container floor or the drain, and wherein the condition and the presence of the stream of draining medium is determined according to one of the claims 1 to 8.

13. Method according to one of the preceding claims, **characterised in that** signal processing comprises a digital switch that issues a constant signal Sₘₐₓ as a characteristic signal for the interrupted or discontinued medium after evaluating the signal S(t) upon exceeding a threshold value of a change dS/dt of signal S(t) over time or the change speed of the change d²S/dt² over time until a further threshold value of the sum of these signals is exceeded, and issues a second constant signal Sₘᵢₙ as a characteristic signal for the continuous or non-existent medium stream if these signals are constant over a pre-determined time interval, wherein the pump is switched off at least when signal Sₘₐₓ changes to signal Sₘᵢₙ.

14. Method for detecting foreign substances or gas bubbles in the inflow of process-technical container, in particular a tank, **characterised in that** a sensor means (2) is arranged in a supply line, wherein a signal S'(t) of the sensor is obtained through analysis of the time change dS/dt or the change speed of the time change d²S/dt² according to a method with the process steps according to one of the claims 1 to 8, and a gas bubble is assumed when a signal swing of signal S'(t) occurs.

15. Method according to one of the preceding claims, **characterised in that** an electrode (2.1) that initially has a cylindrical part (2.1a) at its end that transforms into a conical part (2.1b) and ends in a point in the interior of the container (1) is used.

## Revendications

1. Procédé d'évaluation d'un signal S(t) pour déterminer la présence, la composition ou l'état d'un milieu liquide ou solide ou d'un mélange de tels milieux en évaluant un signal S(t), qui change par à-coups ou continuellement dans le temps et qui est mis à disposition par un dispositif de détection comprenant un capteur capacitif ou formé d'un capteur capacitif, lequel signal est important pour la présence ou les propriétés de matériaux du milieu, sur un point de mesure wᵢ formant une position de mesure, lequel point de mesure étant disposé sur la face intérieure d'une surface de paroi d'un réservoir (1), d'un autre récipient ou d'une conduite,
• le signal S(t) étant relevé et évalué au point de mesure wᵢ, et
• ledit signal étant préparé électroniquement pour l'évaluation du signal S(t) et
• le changement dans le temps dS/dt du signal S(t) survenant à l'entrée du milieu ou du mélange de milieux ou la vitesse de changement du changement dans le temps du champ électrique alternatif d²S/dt² étant saisi et évalué en tant que signal S(t) caractéristique,
**caractérisé en ce que**
• les parts du milieu ou du mélange de milieux se trouvant dans le point de mesure wᵢ sont soumises à un champ électrique alternatif Ø à haute fréquence exploité avec une fréquence comprise entre 80 MHz et 200 MHz de telle sorte qu'elles fassent l'objet d'une polarisation,
• le changement dans le temps du champ électrique alternatif dØ/dt produit par la polarisation ou la vitesse de changement du changement dans le temps du champ électrique alternatif d²Ø/dt² est saisi en tant que signal S(t) à évaluer et
• respectivement un point d'activation E est généré pour un signal de sortie numérique (y; y₁, y₂) pour l'évaluation de la présence du milieu ou du courant de milieu au cours d'un front montant F du signal S(t) sur et/ou en dessus ou en dessous d'une première valeur seuil dS/dt_{G1} ou d²S/dt²_{G1}.

2. Procédé d'évaluation d'un signal S(t) selon la revendication 1, **caractérisé en**
**ce que** le tracé du front F montant et/ou descendant du signal S(t) est comparé aux valeurs seuil dS/dt_{G1} ou d²S/dt²_{G1} et, en tant que grandeur caractéristique pour l'évaluation d'un signal S(t), le dépassement vers le haut ou vers le bas d'une valeur seuil dS/dt_{G1} bzw. d²S/dt²_{G1} est utilisé comme point d'activation E ou comme point de désactivation (A) pour un signal de sortie numérique (y; y₁, y₂) en vue d'évaluer le signal S(t).

3. Procédé d'évaluation d'un signal S(t) selon la revendication 1, **caractérisé en ce que** la valeur absolue du signal S(t) est utilisée pour évaluer le signal S(t).

4. Procédé d'évaluation d'un signal S(t) selon la revendication 1 ou 2, **caractérisé en ce que** la magnitude du signal S(t) est utilisée pour évaluer le signal S(t).

5. Procédé selon l'une quelconque des revendications précédentes, **caractérisé en ce que** le champ alternatif à haute fréquence Ø est exploité à une fréquence de 90 MHz et 140 MHz et de préférence entre 100 MHz et 110 MHz.

6. Procédé selon l'une quelconque des revendications précédentes, **caractérisé en ce que** le temps de cycle, pour lequel le signal S(t) est relevé pour une évaluation, est inférieur à 100 ms, notamment entre 50 ms et 80 ms et notamment de préférence particulière de 70 ms.

7. Procédé selon l'une quelconque des revendications précédentes, **caractérisé en ce que**, pour l'évaluation du signal S(t), une part capacitive du signal S(t) mesuré produite par polarisation et une part produite par conduction ionique sur le milieu ou le courant du milieu est déterminée, le découpage du signal S(t) sur les parts s'effectuant après détermination de la vitesse de changement du signal S(t) et un changement rapide du signal de mesure étant attribué à une conduction ionique intensifiée afin de différencier des milieux à forte conductivité de milieux à moindre forte conductivité présentant des propriétés diélectriques similaires.

8. Procédé selon l'une quelconque des revendications précédentes, **caractérisé en ce que** la largeur du front F du signal S(t), ou une partie de celle-ci, est utilisée comme mesure pour le mouillage et/ou l'adhérence de milieu sur le dispositif de détection (2).

9. Procédé selon l'une quelconque des revendications précédentes, **caractérisé en ce que** le signal S(t) est saisi sur le point de mesure wᵢ et un signal d'alarme est émis lors d'un signal S(t) constant dans le temps en vue du contrôle de l'attitude d'écoulement et de la fluidité d'un courant de milieu le long de la surface de paroi, notamment pour déterminer le blocage d'une conduite.

10. Procédé selon la revendication précédente, **caractérisé en ce que** la fréquence d'apparition d'un front F montant du signal S(t) est utilisée en tant que mesure pour une turbulence dans le courant.

11. Procédé selon l'une quelconque des revendications précédentes, **caractérisé en ce que** la viscosité du milieu est déterminée au moyen de la vitesse de changement du signal S(t), une vitesse moindre du signal décroissant étant considérée comme un indicateur de fluidité à la viscosité accrue.

12. Procédé pour le contrôle de l'écoulement de liquide de nettoyage, notamment d'un réservoir, par un dispositif de pompage, **caractérisé en ce que** ledit dispositif de pompage est éteint par un système automatique de coupure si plus aucun courant de milieu constant ne peut être détecté, au moins un dispositif de détection (2) étant disposé dans la zone du fond d'un réservoir ou de l'écoulement et l'état et la présence du courant du milieu s'écoulant étant déterminés selon l'une quelconque des revendications 1 à 8.

13. Procédé selon la revendication précédente, **caractérisé en ce que** le traitement du signal comprend un circuit numérique qui émet, après évaluation du signal S(t) lors du dépassement d'une valeur seuil du changement dans le temps dS/dt du signal S(t) ou de la vitesse de changement du changement dans le temps d²S/dt² jusqu'au dépassement d'une autre valeur seuil des magnitudes de ces signaux, un signal constant S_{Max} comme signal caractéristique d'un courant de milieu irrégulier ou discontinu puis, lors d'une constance dans le temps de ce signal sur un intervalle prédéterminé, un deuxième signal constant S_{Min} en tant que signal caractéristique du courant de milieu continu ou non présent, la pompe étant coupée au moins lors d'un passage du signal S_{Max} au signal S_{Min}.

14. Procédé pour la détection d'impuretés ou de bulles de gaz dans l'afflux d'un récipient relatif au procédé, notamment d'un réservoir, **caractérisé en ce qu'**un dispositif de détection (2) est disposé dans une alimentation, un signal S'(t) du capteur étant pris en analysant le changement dans le temps dS/dt ou la vitesse de changement du changement dans le temps d²S/dt² obtenu par un procédé comportant les étapes selon l'une quelconque des revendications 1 à 8, considérant que, dans le cas d'une déviation du signal S'(t), une bulle de gaz est présente.

15. Procédé selon l'une quelconque des revendications précédentes, **caractérisé en ce qu'**une électrode (2.1) est utilisée, laquelle présente tout d'abord une partie cylindrique (2.1a) à l'extrémité qui se transforme en une partie conique (2.1b) et se termine par une pointe à l'intérieur du récipient (1).
